(19) Europäisches Patentamt
European Patent Office
Office européen des brevets

(11) **EP 1 852 828 A2**

(12) **EUROPEAN PATENT APPLICATION**

(43) Date of publication:
**07.11.2007 Bulletin 2007/45**

(51) Int Cl.:
***G06T 15/20*** (2006.01)

(21) Application number: **07107202.9**

(22) Date of filing: **30.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **02.05.2006 JP 2006128579**

(71) Applicant: **CANON KABUSHIKI KAISHA Ohta-ku Tokyo 146-8501 (JP)**

(72) Inventors:
• **Kobayashi, Toshihiro Ohta-ku, Tokyo 146-8501 (JP)**
• **Ohshima, Toshikazu Ohta-ku, Tokyo 146-8501 (JP)**

(74) Representative: **TBK-Patent Bavariaring 4-6 80336 München (DE)**

(54) **Information processing apparatus and control method thereof, image processing apparatus, computer program, and storage medium**

(57) An information processing apparatus connected to a display apparatus, the information processing apparatus is characterized by comprising an acquisition means (101) configured to acquire a real image captured by an imaging apparatus; a generation means (105) configured to generate a virtual image based on an orientation of said imaging apparatus; a detection means (104) configured to detect a tilt of the real image; a correction means (106) configured to correct the real image based on the detected tilt of said real image; a composite means (108) configured to generate a composite image based on the corrected real image and the virtual image; and an output means (110) configured to output the corrected composite image to said display apparatus.

**EP 1 852 828 A2**

**F I G. 1**

**Description**

BACKGROUND OF THE INVENTION

Field of the Invention

The present invention relates to information processing apparatus and control method thereof, image processing apparatus, computer program, and storage medium. More specifically, the present invention relates to mixed reality technology.

Description of the Related Art

There are many known systems (MR systems or mixed reality systems) based on mixed reality technology, which combines the real world with a virtual world in a natural manner that does not cause discomfort. Such an MR system displays a mixed reality image, created by combining a real image (an actually-sensed image) taken by an imaging apparatus such as a camera with an image (virtual image) of a virtual space rendered using CG (Computer Graphics), onto a display apparatus such as an HMD. Through this procedure, an MR system provides a mixed reality to its users. In the above description, CG stands for computer graphics, while HMD stands for head-mounted display.

Since such MR systems create virtual images in order to track changes in real images, there is a need to acquire the position and orientation of a viewpoint of a user on a real-time basis. A six-degree-of-freedom position and orientation sensor apparatus is widely used for acquiring the position and orientation. An MR system converts a user's viewpoint position and orientation, as measured by a six-degree-of-freedom position and orientation sensor apparatus, into a virtual viewpoint position and orientation in virtual space, renders a virtual image using CG, and combines the virtual image with the real image. As a result, the user of the MR system will be able to observe an image on which virtual objects are portrayed as if they truly exist in a real space.

A user of an MR system typically uses a head-fixed type display apparatus such as an HMD. An HMD is equipped with a video camera configured to be approximately optically consistent with the position and orientation of a viewpoint of an observer. An MR system using an HMD takes real images from the position and orientation of the viewpoint of the user (observer) wearing the HMD, and creates virtual space images which are observed from the same position and orientation. As a result, such an MR system is able to enhance the sense of immersion of the observer.

On the other hand, with an MR system using an HMD, only the observer wearing the HMD is able to observe mixed reality images, and third persons not wearing the HMD are unable to observe mixed reality images. For this reason, the same mixed reality images being presented to the observer are displayed on a stationary display apparatus such as a CRT, projector or a large-screen display to be presented to unspecified third persons. As a result, even third persons not wearing HMDs are able to experience the same mixed reality that is being experienced by the observer wearing an HMD.

In this case, a third person will observe a mixed reality image created from the observer's viewpoint. Should the observer move or tilt his/her head, a mixed reality image corresponding to the changes in the observer's position and orientation will be presented to the third person even if the third person remains stationary. Therefore, when the observer tilts his/her head in order to, for instance, peer down at an object, a tilted mixed reality image will be presented on the HMD of the observer, and at the same time, a tilted mixed reality image will be presented on the stationary display apparatus viewed by the third person. Since the mixed reality image is created to be displayed on the HMD of the observer, the mixed reality image is, obviously, appropriate for the observer. However, since the third person will not be tilted in the same manner as the observer when viewing the stationary display, the third person will inevitably sense that the presented mixed reality image is unnaturally tilted at an angle that is inconsistent to the tilt of his/her own head. In addition, since the position and orientation of the head of the observer wearing the HMD changes constantly, the above-mentioned unnaturalness sensed by the third person observing the stationary display apparatus will increase. As a result, the third person may eventually feel discomfort while observing the presented mixed reality image.

In other words, with an MR system as described above, there are cases in which a mixed reality image that is appropriate for an observer tilting his/her head may not be appropriate for a third person having a viewpoint position and orientation different from that of the observer. Therefore, it is required that mixed reality images corresponding to changes in the position and orientation of the observer be presented to the observer, while mixed reality images void of tilt caused by changes in the position and orientation of the observer be presented to third persons.

An electronic camera disclosed in Japanese Patent Laid-Open No. 10-164426 controls an image to be recorded so as to maintain a constant vertical orientation by detecting the orientation of an imaging plane.

However, processing performed by the electronic camera disclosed in Japanese Patent Laid-Open No. 10-164426 is limited to detection of rotation direction and the angle of an imaging unit and to rotation of the image based on the detection results. Therefore, the above-described invention is neither capable of presenting appropriate mixed reality images to an observer wearing an HMD nor to a third person not wearing an HMD.

SUMMARY OF THE INVENTION

The present invention has been made in consideration of the above problem, and its object is to provide a technique capable of presenting appropriate mixed reality images to both an observer wearing an HMD and a third person not wearing an HMD.

In order to achieve the above object, the present invention in its first aspect provides an information processing apparatus as specified in claims 1 to 9. The present invention in its second aspect provides an image processing apparatus as specified in claims 10 to 14 and 17. The present invention in its third aspect provides a control method for an information processing apparatus as specified in claims 15 to 16.

Further features of the present invention will become apparent from the following description of exemplary embodiments with reference to the attached drawings.

BRIEF DESCRIPTION OF THE DRAWINGS

FIG. 1 is a block diagram showing an outline of a function configuration of an image processing apparatus according to a first embodiment;

FIG. 2 is an explanatory diagram of processing to be performed by an image rotation unit;

FIG. 3 is a flowchart showing a flow of processing performed by an image processing apparatus;

FIG. 4 is a block diagram showing an outline of a function configuration of an image processing apparatus according to a second embodiment;

FIG. 5 is a block diagram showing an outline of a function configuration of an image processing apparatus according to a third embodiment;

FIG. 6 is a block diagram showing an outline of a function configuration of an image processing apparatus according to a fourth embodiment;

FIG. 7 is a flowchart showing a flow of processing performed by an image processing apparatus;

FIG. 8 is a block diagram showing an outline of a function configuration of an image processing apparatus according to a fifth embodiment;

FIG. 9 is a block diagram showing an outline of a function configuration of an image processing apparatus according to a sixth embodiment;

FIG. 10 is a block diagram showing an outline of a hardware configuration of an image processing apparatus;

FIG. 11 is a block diagram showing an outline of a function configuration of an image processing apparatus according to a seventh embodiment;

FIG. 12 is a block diagram showing an outline of a function configuration of an image processing apparatus according to an eighth embodiment;

FIG. 13 is a block diagram showing an outline of a function configuration of an image processing apparatus according to a ninth embodiment;

FIG. 14 is a schematic diagram depicting an occurrence of a defect in an image after rotation; and

FIG. 15 is an explanatory diagram of trimming processing.

DESCRIPTION OF THE EMBODIMENTS

Preferred embodiments of the present invention will now be described in detail with reference to the attached drawings. However, it should be noted that the components described with respect to the embodiments are merely illustrative, and are not restrictive of the scope of the present invention.

[First embodiment]

(Outline configuration of image processing apparatus)

In the first embodiment, a description will be given of a configuration in which an image observed by an observer that is wearing an HMD and experiencing mixed reality is output to the HMD as well as a stationary display. In this case, an ordinary mixed reality image is displayed on the HMD, while a tilt-corrected mixed reality image is displayed on the stationary display.

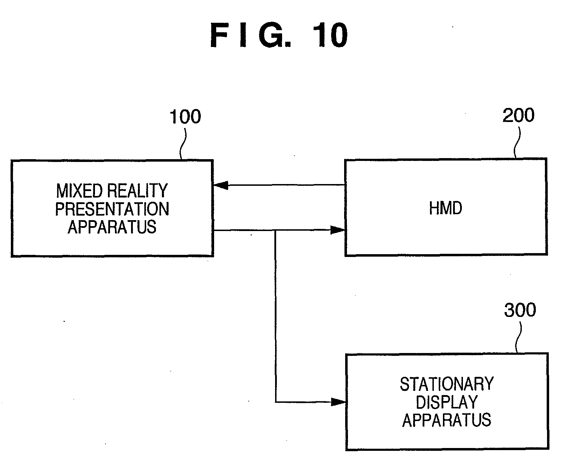

FIG. 10 is a block diagram showing an outline of a hardware configuration of an image processing apparatus according to the present embodiment. Rectangles shown in FIG. 10 represent modules which realize the configuration according to the present embodiment. Arrows represent flows of images or signals between the modules.

A mixed reality presentation apparatus (information processing apparatus) 100 is a module which performs a primary function of an image processing apparatus according to the present embodiment. The mixed reality presentation apparatus 100 creates a mixed reality image based on output from an imaging unit 101 and a position and orientation measurement unit 102, both provided on an HMD 200, and displays the created image on the HMD 200 and a stationary display apparatus 300. The imaging unit 101 and the position and orientation measurement unit 102 of the HMD 200 will be described later.

In practice, the mixed reality presentation apparatus 100 may be realized by an information processing apparatus such as a personal computer or a workstation. In this case, the mixed reality presentation apparatus 100 comprises a CPU that controls processing of the entire apparatus and a storage device such as a RAM, ROM or a (hard) disk, and controls processing by executing program code. However, methods for realizing the mixed reality presentation apparatus 100 are not limited to this arrangement and the mixed reality presentation apparatus 100 may be configured as a semiconductor integrated circuit which performs equivalent processing.

As described in detail below, the mixed reality presentation apparatus 100 acquires a captured real image from the imaging unit 101, creates a virtual image based on the orientation of the HMD 200 (imaging unit 101), and detects a tilt of the real image. In addition, the mixed reality presentation apparatus 100 corrects the real image and the virtual image based on the detected tilt of the real image, creates a composite image based on the respectively corrected real image and virtual image, and outputs the composite image on the stationary display apparatus 300.

The HMD 200 (second display apparatus according to the present invention) is a display apparatus such as an HMD which the observer mounts or fixes to his/her head. The HMD 200 optically displays images input to the HMD 200 in front of the eyes of the observer. In the present embodiment, the HMD 200 is equipped with a built-in video camera which is installed to be approximately optically consistent with the position and orientation of the viewpoint of the observer. The video camera built into the HMD 200 acquires real images observed from the viewpoint position of the observer, and outputs the images to the mixed reality presentation apparatus 100. In addition, the HMD 200 is equipped with a function for measuring the position and orientation of the viewpoint of the observer, and outputs measured position and orientation information to the mixed reality presentation apparatus 100. Note that the HMD 200 need not be limited to a display apparatus configured to be mounted on the head of the observer. For instance, a display apparatus that is configured to be held in the hand or the like of the observer may perform the same function as the HMD 200.

The stationary display apparatus (display apparatus) 300 is a large-screen display apparatus such as a plasma display, and displays images output from the mixed reality presentation apparatus 100 on a screen. The stationary display apparatus 300 enables third persons other than the observer using the HMD 200 to view mixed reality images.

Software realizing functions equivalent to those of each apparatus described above may be configured as an alternative to the hardware apparatus.

In addition, while the image processing apparatus present embodiment will be described as a configuration featuring the above three modules for ease of explanation, configurations of the image processing apparatus are not limited to this example. For instance, the above three modules may be configured in order to be realized through a single apparatus. Alternatively, for instance, the present embodiment may be configured to be realized by the mixed reality presentation apparatus 100 built into the HDM 200 or the stationary display apparatus 300. Alternatively, for instance, the present embodiment may be configured and realized by distributing the functions of the mixed reality presentation apparatus 100 to components virtually realized on a plurality of information processing apparatuses, and performing parallel processing using the information processing apparatuses.

(Function configuration of image processing apparatus)

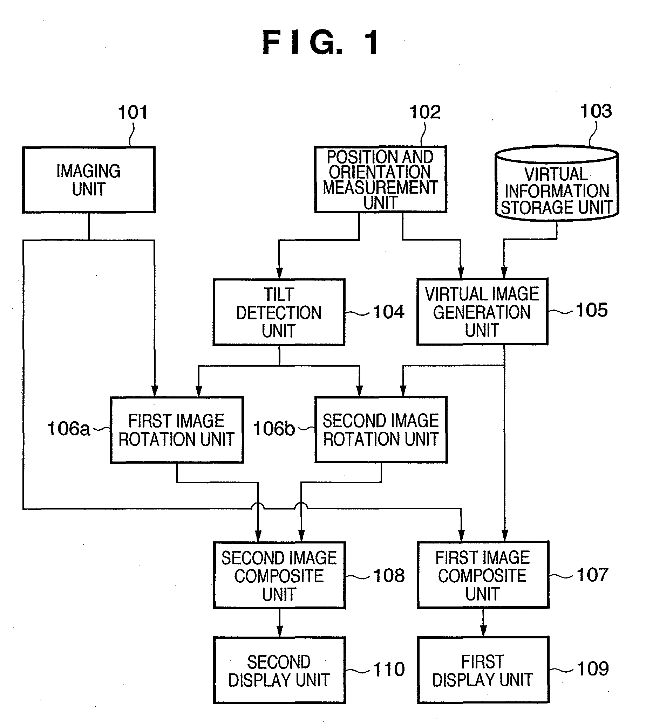

A function configuration of an image processing apparatus according to the present embodiment will now be described with reference to FIG. 1. FIG. 1 is a block diagram showing an outline of a function configuration of the image processing apparatus according to the present embodiment.

In FIG. 1, the imaging unit 101 acquires an actually-sensed image (real image) observed from the observer's viewpoint. In the present embodiment, a video camera built into the HMD 200 realizes the functions of the imaging unit 101. The real image acquired by the imaging unit 101 is output to an image rotation unit 106a and a first image composite unit 107.

The position and orientation measurement unit 102 provided on the HMD 200 measures a position and orientation of the observer's viewpoint within a three-dimensional space, and outputs the position and orientation to a tilt detection unit 104 and a virtual image generation unit 105. The position and orientation measurement unit 102 is realized by, but not limited to, a measurement device such as a six-degree-of-freedom sensor. For instance, the position and orientation may alternatively be calculated by arranging the imaging unit 101 to capture an indicator (marker) arranged in space, having a known three-dimensional position, and detecting coordinates of the indicator from the captured image. The position and orientation calculated in this manner may be output to the tilt detection unit 104 and the virtual image generation unit 105. In this case, the real images output from the imaging unit 101 will be input to the position and orientation measurement unit 102.

A virtual information storage unit 103 stores virtual space information used by the virtual image generation unit 105 for generating a virtual image. The virtual information storage unit 103 supplies virtual space information to the virtual image generation unit 105 when a virtual image is generated. In the present embodiment, information necessary for rendering a virtual space as a three-dimensional CG image, such as information on three-dimensional shapes of CG objects arranged in a virtual world, arrangement information, light source information, object composition and texture images, is retained as virtual space information. Information on three-dimensional shapes includes vertex coordinates, information on surface configuration, normal vectors and the like.

The tilt detection unit 104 receives as input information regarding the viewpoint orientation of an observer wearing the HMD 200 from the position and orientation measurement unit 102, and detects a tilt of the real image based on the orientation information, and outputs the detected tilt to image rotation units 106a and 106b. In the present embodiment, the tilt of a real image is detected by extracting a roll angle, which is a rotation angle when the viewpoint is given as the rotational axis, from orientation information output from the position and orientation measurement unit 102 installed in the HMD 200. Extraction of a roll angle is performed by calculating a rotation matrix in three-dimensional space from orientation information output from the position and orientation measurement unit 102, and resolving the matrix into respective components of a roll angle, pitch angle and yaw angle. The tilt detection unit 104 outputs the extracted roll angle to image rotation units 106a and 106b. When a roll angle is included in the orientation measured by the position and orientation measurement unit 102, and the position and orientation measurement unit 102 is capable of directly outputting the roll angle, the tilt detection unit 104 outputs the inputted roll angle without modification to the image rotation units 106a and 106b. The present embodiment is provided with two image rotation units, and the tilt detection unit 104 outputs the roll angle to both of the two image rotation units 106a and 106b.

Based on information from the position and orientation measurement unit 102 and the virtual information storage unit 103, the virtual image generation unit 105 performs CG rendering to generate a virtual image. The virtual image generation unit 105 outputs the generated virtual image to the image rotation unit 106b and the image composite unit 107. More specifically, the virtual image generation unit 105 sets the position and orientation output from the position and orientation measurement unit 102 as a viewpoint from which virtual space is observed. After arranging CG objects retained in the virtual information storage unit 103 in virtual space based on this viewpoint, the virtual image generation unit 105 generates a virtual image by performing CG rendering.

Based on the tilt of the image output from the tilt detection unit 104, the respective image rotation units 106a and 106b apply a rotational transformation on an image output from the imaging unit 101 or the virtual image generation unit 105 so as to negate the tilt of the image. In the present embodiment, since a roll angle (a rotation angle when viewpoint is given as the rotational axis) from the observer's viewpoint is output from the tilt detection unit 104, the input image will be rotated in the reverse direction of the roll angle.

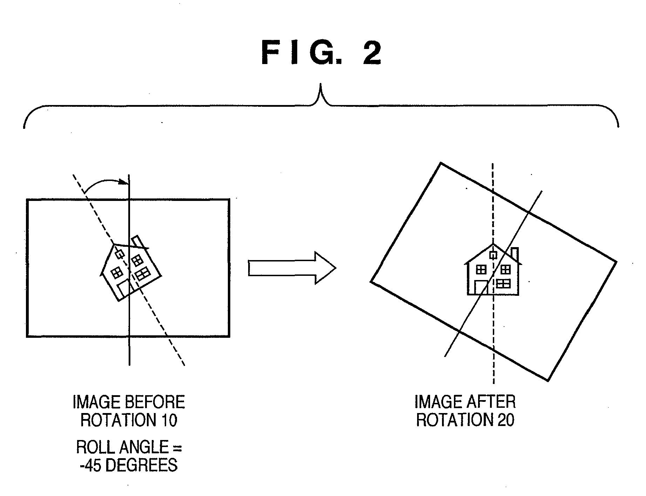

FIG. 2 is an explanatory diagram of processing to be performed by the image rotation unit 106. For instance, assume that an image before rotation 10 and a roll angle of -45 degrees have been input to the image rotation unit 106. The image rotation unit 106 performs rotational transformation on the image before rotation 10 shown in FIG. 2 so as to negate the roll angle of -45 degrees. In other words, the image rotation unit 106 rotates the image before rotation 10 by +45 degrees, and outputs an image after rotation 20.

When the coordinate of each pixel in the image before rotation 10 is represented by $(u, v)^T$, the coordinate of each pixel in the image after rotation 20 is represented by $(u', v')^T$, and the inputted roll angle is represented by $\theta$, each pixel of the image after rotation 20 may be expressed by the following formula, where the rotational center is given as $(u, V)^T = (0, 0)^T$.

[Formula 1]

$$\begin{pmatrix} u' \\ v' \end{pmatrix} = \begin{pmatrix} \cos\theta & -\sin\theta \\ \sin\theta & \cos\theta \end{pmatrix} \begin{pmatrix} u \\ v \end{pmatrix}$$

For instance, the center of the image or the coordinates of a point in the image corresponding to the optical center of the imaging unit 101 or the like may be used as the rotational center. The optical center of the imaging unit 101 may be calculated by calibration of the imaging unit 101 or the like. Since specific methods for calculating an optical center are well known, descriptions thereof will be omitted.

The image processing apparatus according to the present invention comprises two image rotation units 106a and 106b (which will be collectively denoted as 106). The first image rotation unit (the first image rotation unit according to the present invention) 106a receives as input a real image output from the imaging unit 101 and a roll angle output from the tilt detection unit 104, and outputs an image after rotation 20 to the second image composite unit 108. The second image rotation unit (the second image rotation unit according to the present invention) 106b receives as input a virtual image output from the virtual image generation unit 105 and the roll angle output from the tilt detection unit 104, and outputs the image after rotation 20 to the second image composite unit 108.

The first image composite unit (second composite unit according to the present invention) 107 superimposes the virtual image generated by the virtual image generation unit 105 onto the real image acquired by the imaging unit 101 to generate a mixed reality image. The second image composite unit 108 superimposes the virtual image after rotation output by the second image rotation unit 106b onto the real image after rotation output by the first image rotation unit 106a to generate a mixed reality image. The mixed reality image generated by the first image composite unit 107 is output to a first display unit 109, while the mixed reality image generated by the second image composite unit 108 is output to a second display unit 110.

As described above, the image processing apparatus according to the present invention comprises two image composite units 107 and 108. The first image composite unit 107 receives as input a real image output from the imaging unit 101 and a virtual image output from the virtual image generation unit 105, and outputs a generated mixed reality image to the first display unit 109. The second image composite unit 108 (first image composite unit according to the present invention) respectively receives as input images after rotation 20 output from the two image rotation units 106a and 106b, and outputs a generated mixed reality image to the second display unit 110. In the present embodiment, the first image composite unit 107 and the second image composite unit 108 first superimpose virtual images onto real images. Superposition processing is not performed on background portions of the virtual images. Real images are superimposed on portions of the virtual images other than the backgrounds. As a result of the superposition processing, in the mixed reality images generated by the first image composite unit 107 and the second image composite unit 108, virtual images will only be superimposed on the real images in portions where virtual space CG exist.

Portions of the virtual image in which virtual space CG exist may also be arbitrarily set as portions on which superposition will not be performed in order to create special effects. For instance, by performing processing so that the virtual image will not be superimposed on portions of the real image which contain a specific color, a phenomenon in which virtual space CG are always observed in front of real objects may be avoided. Such processing may be executed using, for instance, a method disclosed in Japanese Patent Laid-Open 2003-296759. In the present embodiment, the only differences between the first image composite unit 107 and the second image composite unit 108 are the source modules which input images to the image composite units as well as the destination modules of images output from the image composite units. Otherwise, contents of processing performed by the first image composite unit 107 and the second image composite unit 108 are the same.

The first display unit (second output unit according to the present invention) 109 receives as input mixed reality images output from the first image composite unit 107, and displays the input mixed reality images. The second display unit (first output unit according to the present invention) 110 receives as input mixed reality images output from the second image composite unit 108, and displays the input mixed reality images. The first display unit 109 is provided at the HMD 200, and displays mixed reality images observed from the viewpoint of the observer using the HMD 200. In other words, the first display unit 109 displays mixed reality images on which rotational transformation has not been applied by the image rotation unit 106. The second display unit 110 is provided on the stationary display apparatus 300, and displays mixed reality images observed from the viewpoint of the observer that is using the HMD 200 from which image tilt has been removed. In other words, the second display unit 110 displays mixed reality images on which rotational transformation has been applied by the image rotation unit 106. In the present embodiment, a display apparatus having a screen that is larger than that of the first display unit 109 is used as the second display unit 110. This allows mixed reality images observed by the observer wearing the HMD 200 to be presented to third persons not wearing the HMD 200.

(Basic processing)

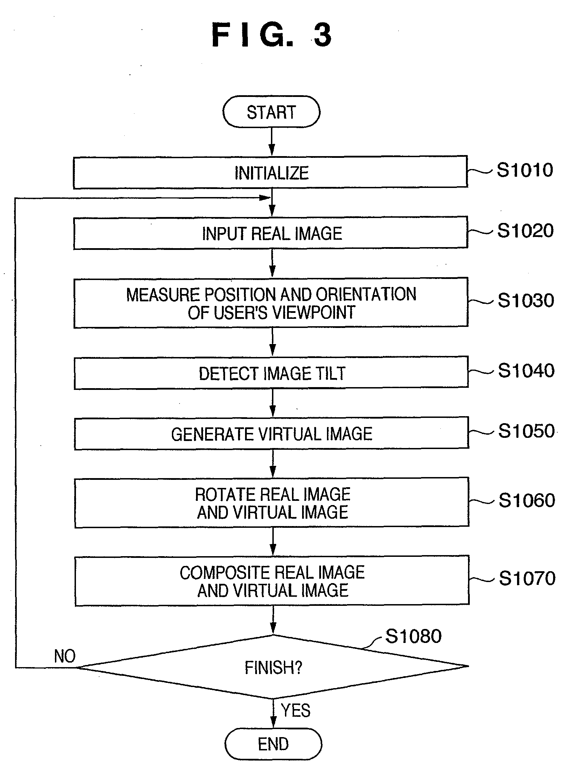

A description will now be given of control performed by the image processing apparatus according to the present embodiment, which is configured as described above, with reference to FIG. 3. FIG. 3 is a flowchart showing a flow of processing performed by the image processing apparatus according to the present embodiment. Program code in accordance with the flowchart shown is stored in a storage device, not shown, such as a disk device or a RAM provided in the image processing apparatus, and is read out and executed by a CPU.

First, in step S1010, the image processing apparatus according to the present embodiment is activated, and necessary initialization is performed. Necessary initialization includes processing performed by the CPU for reading out program code or virtual space information from a disk device, and storing the same in a RAM.

In step S1020, the imaging unit 101 acquires a real image from the viewpoint of the observer wearing the HMD 200.

In step S1030, the position and orientation measurement unit 102 measures the position and orientation of the viewpoint of the observer wearing the HMD 200.

In step S1040, the tilt detection unit 104 detects a tilt of the real image acquired in step S1020.

In step S1050, the virtual image generation unit 105 performs CG rendering of a virtual space using the position and orientation measured in step S1030 as a viewpoint, and generates a virtual image.

In step S1060, the image rotation unit 106 applies rotational transformation to the real image acquired in step S1020 and the virtual image generated in step S1050.

In step S1070, the first image composite unit 107 and the second image composite unit 108 receive as input the real image and the virtual image, and generate mixed reality images in which the virtual image is superimposed on the real image. As described above, the present embodiment comprises two image composite units 107 and 108. The first image composite unit 107 forms a composite image of the real image acquired in step S1020 and the virtual image generated in step S1050, and outputs the composite image to the first display unit 109. The second image composite unit 108 forms a composite image of the real image acquired in step S1020 and the virtual image on which rotational transformation had been applied in step S1060, and outputs the composite image to the second display unit 110.

In step S1080, a determination is made as to whether the present processing is to be concluded. If YES, processing according to the present embodiment is concluded. On the other hand, if NO, the processing returns to step S1020 to be continued therefrom.

It should be noted that, in the present embodiment, the series of processing of steps S1020 to S1080 are performed in a short period of time. The time required to complete a single routine of this series of processing is normally within several milliseconds to several hundred milliseconds. Therefore, the image processing apparatus according to the present embodiment continuously displays mixed reality images which change within a short period of time by repetitively executing the processing of steps S1020 to S1080. As a result, the observer and the third persons will recognize the mixed reality images as a series of moving images.

While description of a flow of control according to the present embodiment has been provided above, the described sequence is merely exemplary, and the sequence of parts of the processing may be modified. For instance, the sequence of processes may be arbitrarily modified as long as the process of step S1020 is performed before that of step S1060, the process of step S1030 is performed before that of step S1040, and the process of step S1040 is performed before that of S1060. However, the sequences of steps S1010, S1070 and S1080 may not be changed.

As described above, the mixed reality presentation apparatus 100 acquires a captured real image from the imaging unit 101, creates a virtual image based on the orientation of the HMD 200 (imaging unit 101), and detects a tilt of the real image. In addition, the mixed reality presentation apparatus 100 corrects the real image and the virtual image based on the detected tilt of the real image, creates a composite image based on the respectively corrected real image and virtual image, and outputs the composite image onto the stationary display apparatus 300. As a result, a corrected image will be output to the stationary display apparatus 300 based on the detected tilt of the real image. Therefore, the configuration according to the first embodiment is capable of respectively presenting appropriate mixed reality images to an observer wearing a head-fixed type display apparatus (HMD) and to a third person not wearing a head-fixed type display apparatus.

[Second embodiment]

An image processing apparatus according to a second embodiment outputs an image seen by an observer wearing an HMD and experiencing mixed reality to an HMD 200 and a stationary display 300. In this case, an ordinary mixed reality image is displayed on the HMD 200, while a tilt-corrected mixed reality image is displayed on the stationary display 300. While many similarities exist between the configuration and controls of the second embodiment and those of the first embodiment, the second embodiment differs from the first embodiment in the method used to detect tilt in a real image. In the configuration according to the first embodiment, the tilt of an real image is detected using a position and orientation acquired by the position and orientation measurement unit 102 provided on the HMD 200. However, in the configuration according to the second embodiment, tilt is detected using the real image captured by the imaging unit 101.

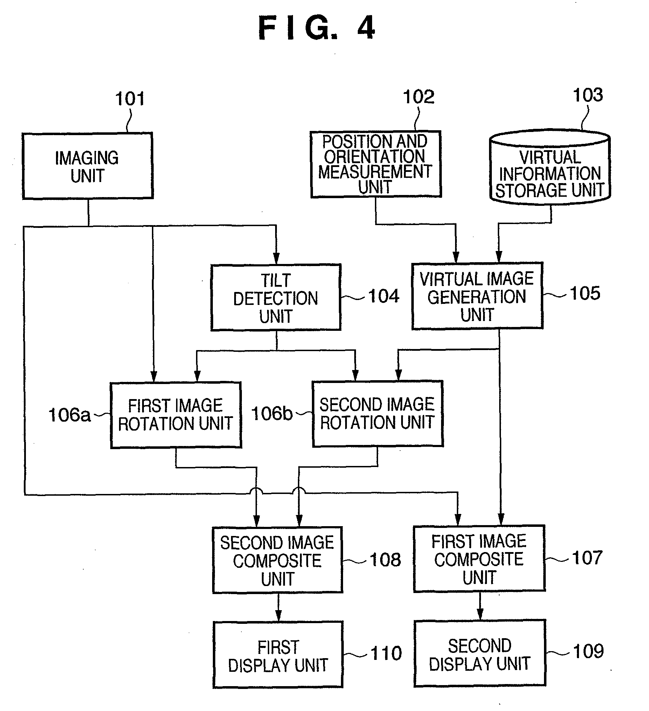

FIG. 4 is a block diagram showing an outline of a function configuration of the image processing apparatus according to the present embodiment. Compared to the function configuration according to the first embodiment (FIG. 1), the tilt detection unit 104 differs therefrom in that instead of inputting orientation output from the position and orientation measurement unit 102, it inputs a real image output from the imaging unit 101. With respect to the configuration of the present embodiment, only portions of it which differ from the first embodiment will now be described.

In the present embodiment, the imaging unit 101 outputs an acquired real image to the image rotation unit 106a, the image composite unit 107 and the tilt detection unit 104. Additionally, in the present embodiment, the position and orientation measurement unit 102 outputs measured position and orientation information to the virtual image generation unit 105.

In the present embodiment, the tilt detection unit 104 receives as input a real image from the imaging unit 101, and detects a tilt of the image. The tilt detection unit 104 outputs the detected tilt to the image rotation unit 106. The tilt detection unit 104 calculates a roll angle, which is a rotation angle when the viewpoint is given as the rotational axis, for the image output from the imaging unit 101. The tilt detection unit 104 outputs the extracted roll angle to the image rotation unit 106.

The processing performed by the tilt detection unit 104 to calculate a roll angle according to the present embodiment will be described below. The tilt detection unit 104 calculates an optical flow from the real image output from the imaging unit 101. An optical flow indicates a migration speed of each point on an image. A plurality of methods such as the gradient-based method or the block matching method is known for calculating optical flow. In the present embodiment, when an origin of a displacement vector of an optical flow is represented by A, an end-point thereof by B, and a center of an image by O, an angle expressed as $\angle AOB$ is calculated for each displacement vector, and an average value thereof is output as a roll angle to the image rotation unit 106.

In the above description, while a roll angle is calculated by the tilt detection unit 104 based on an optical flow in an image, the present embodiment is not limited to this arrangement. Any method may be used to realize the functions of the tilt detection unit 104, as long as a rotational angle around the line of sight of the observer may be obtained from an image acquired by the imaging unit 101.

As described above, the configuration according to the present embodiment analyzes an acquired real image to detect tilt. Therefore, even if the HMD 200 is unable to detect an orientation, the tilt of the real image may be detected in order to correct the image in an appropriate manner. Therefore, the configuration according to the second embodiment is capable of presenting appropriate mixed reality images to an observer wearing a head-fixed type display apparatus (HMD) as well as to a third person not wearing a head-fixed type display apparatus. It is obvious that the method for detecting the tilt of the real image described with respect to the present embodiment may be applied not only to the configuration according to the first embodiment, but also to a configuration according to a third embodiment, which will be described below.

[Third embodiment]

An image processing apparatus according to a third embodiment outputs an image seen by an observer wearing an HMD and experiencing mixed reality to an HMD 200 and a stationary display 300. In this case, an ordinary mixed reality image is displayed on the HMD 200, while a tilt-corrected mixed reality image is displayed on the stationary display 300. While many similarities exist between the configuration and controls of the third embodiment and those of the first embodiment, the third embodiment differs from the first embodiment in the method used to correct tilt in a virtual image. The configuration according to the first embodiment performs correction by rotating the generated virtual image. In contrast, the configuration according to the third embodiment corrects the orientation at which virtual space is rendered, and generates a virtual space accordingly. In other words, the configuration according to the third embodiment generates a virtual image in a tilt-corrected state.

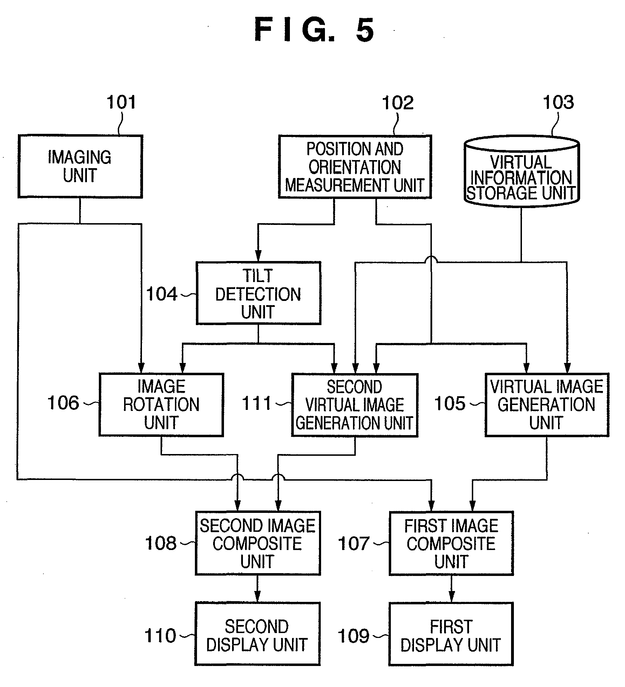

FIG. 5 is a block diagram showing an outline of a function configuration of the image processing apparatus according to the present embodiment. Compared to the configuration of the first embodiment (FIG. 1), there is now only one image rotation unit 106, and a second virtual image generation unit 111 has been newly added.

In the present embodiment, the mixed reality presentation apparatus 100 acquires a real image captured by the imaging unit 101, detects a tilt of the real image, and corrects the real image based on the detected tilt of the real image. In addition, the mixed reality presentation apparatus 100 generates a virtual image, based on an orientation of the imaging unit 101 (HMD 200) and the detected tilt of the real image, generates a composite image based on the corrected real image as well as the virtual image, and outputs the composite image to the stationary display apparatus 300.

With respect to the configuration and controls of the present embodiment, only portions thereof that differ from the first embodiment will now be described. In the present embodiment, the position and orientation measurement unit 102 outputs measured position and orientation information to the tilt detection unit 104, the virtual image generation unit 105, and the second virtual image generation unit 111. Additionally, in the present embodiment, the tilt detection unit 104 outputs the detected tilt to the image rotation unit 106 and to the second virtual image generation unit 111.

Based on information from the position and orientation measurement unit 102, the virtual information storage unit 103 and the tilt detection unit 104, the second virtual image generation unit 111 performs CG rendering to generate a virtual image. The generated virtual image is sent to the second image composite unit 108. In the same manner as the virtual image generation unit 105, after arranging CG objects retained in the virtual information storage unit 103 in virtual space based on the observer's viewpoint, the second virtual image generation unit 111 performs CG rendering to generate a virtual image. At this point, based on a roll angle from the tilt detection unit 104, a roll angle component is removed from the orientation output from the position and orientation measurement unit 102. More specifically, a roll angle, a pitch angle and a yaw angle are calculated from a three-dimensional rotation matrix R representing the orientation. Subsequently, another calculation is performed using the pitch angle and the yaw angle to obtain a three-dimensional rotation matrix R'. In other words, among the angles obtained from R, only the roll angle is discarded (the roll angle component is set to 0) to construct R'. As a result, the second virtual image generation unit 111 generates a virtual image from which rotation around the line of sight (on an image plane of the virtual image) of the observer has been removed.

When a roll angle is included in the orientation measured by the position and orientation measurement unit 102, and the position and orientation measurement unit 102 is capable of directly outputting the roll angle, the second virtual image generation unit 111 need only set the input roll angle to 0 degrees and perform CG rendering. In this case, output from the tilt detection unit 104 will not be required.

In the present embodiment, the second image composite unit 108 receives as input an image after rotation 20 of a real image output by the imaging unit 106 as well as a virtual image output by the second virtual image generation unit 111, and outputs a generated mixed reality image to the second display unit 110.

With the image processing apparatus according to the present embodiment, in step S1050 shown in FIG. 3, the virtual image generation unit 105 and the second virtual image generation unit 111 generate virtual images.

As described above, in the present embodiment, the mixed reality presentation apparatus 100 acquires a real image captured by the imaging unit 101, detects a tilt of the real image, and corrects the real image based on the detected tilt of the real image. In addition, the mixed reality presentation apparatus 100 generates a virtual image based on an orientation of the imaging unit 101 (HMD 200) and the detected tilt of the real image, generates a composite image based on the corrected real image and the virtual image, and outputs the composite image to the stationary display apparatus 300.

Therefore, unlike the first embodiment, the configuration according to the present embodiment rotates the viewpoint from which CG rendering is performed, and does not rotate the virtual images themselves. Thus, defects due to rotation do not occur in the virtual images. Therefore, the configuration according to the third embodiment is capable of presenting appropriate mixed reality images to an observer wearing a head-fixed type display apparatus (HMD) as well as to third persons not wearing a head-fixed type display apparatus.

[Fourth embodiment]

An image processing apparatus according to a fourth embodiment outputs an image seen by an observer wearing an HMD and experiencing mixed reality to an HMD 200 and a stationary display 300. In this case, an ordinary mixed reality image is displayed on the HMD 200, while a tilt-corrected mixed reality image is displayed on the stationary display 300. While many similarities exist between the configuration and controls of the fourth embodiment and those of the first embodiment, instead of correcting both a real image and a virtual image as in the first embodiment, the configuration according to the fourth embodiment corrects the tilt of an image after superimposing the virtual image onto the real image.

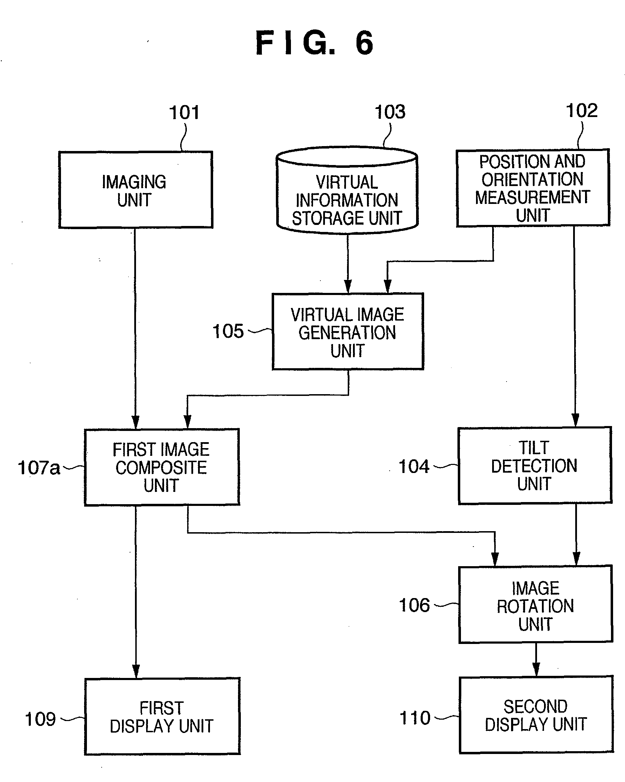

FIG. 6 is a block diagram showing an outline of a function configuration of the image processing apparatus according to the present embodiment. Compared to the first embodiment, there is now only one image rotation unit 106, and the second image composite unit 108 has been omitted.

In the present embodiment, the mixed reality presentation apparatus 100 acquires a captured real image from the imaging unit 101, creates a virtual image based on the orientation of the imaging unit 101 (HMD 200), generates a composite image based on the real image and the virtual image, and detects a tilt of the real image. Furthermore, the mixed reality presentation apparatus 100 corrects the composite image based on the detected tilt of the real image, and outputs the corrected composite image to the stationary display apparatus 300.

With respect to the configuration and controls of the present embodiment, only portions thereof that differ from the first embodiment will now be described. In the present embodiment, the virtual image generation unit 105 outputs a generated virtual image to a first image composite unit 107a. Additionally, in the present embodiment, the first image composite unit 107a receives as input a real image output from the imaging unit 101 and a virtual image output from the virtual image generation unit 105, and outputs a generated mixed reality image to the first display unit 109 and the image rotation unit 106. Furthermore, in the present embodiment, the image rotation unit 106 receives as input a mixed reality image output from the first image composite unit 107a and a roll angle output from the image rotation unit 104, and outputs an image after rotation 20 to the second display unit 110.

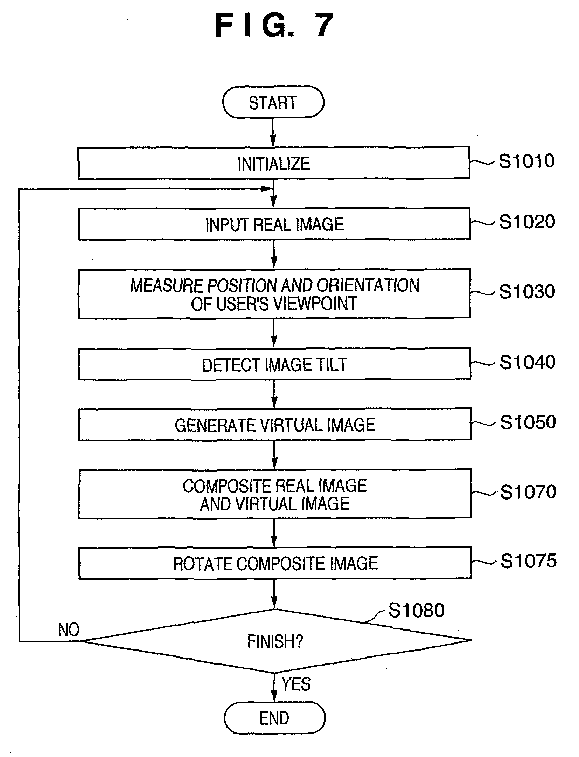

Control of the present embodiment configured as described above will now be described. FIG. 7 is a flowchart showing a flow of processing performed by the image processing apparatus according to the present embodiment. In comparison with the control of the first embodiment (FIG. 3), the process of step S1060 has been deleted and a process of step S1075 has been added.

In step S1070, the first image composite unit 107 receives as input a real image and a virtual image, generates a mixed reality image in which the virtual image is superimposed on the real image, and outputs the generated mixed reality image to the image rotation unit 106 and the first display unit 109.

In step S1075, the image rotation unit 106 applies rotational transformation to the mixed reality image generated in step S1070, and outputs the image to the second display unit 110. The processing next proceeds to step S1080.

As described above, in the present embodiment, the mixed reality presentation apparatus 100 acquires a captured real image from the imaging unit 101, creates a virtual image based on the orientation of the imaging unit 101 (HMD 200), and generates a composite image based on the real image and the virtual image. Furthermore, the mixed reality presentation apparatus 100 detects a tilt of the real image, corrects the composite image based on the detected tilt of the real image, and outputs the corrected composite image to the stationary display apparatus 300.

As seen in the configuration according to the present embodiment, since image correction processing is performed only on the virtual image output from the first image composite unit 107, the configuration according to the present embodiment may be realized using a relatively simple arrangement. Thus, as described above, the configuration according to the third embodiment is capable of presenting appropriate mixed reality images to an observer wearing a head-fixed type display apparatus (HMD) and to a third person not wearing a head-fixed type display apparatus.

[Fifth embodiment]

An image processing apparatus according to a fifth embodiment outputs an image seen by an observer wearing an HMD and experiencing mixed reality to an HMD 200 and a stationary display 300. In this case, an ordinary mixed reality image is displayed on the HMD 200, while either an ordinary mixed reality image or a tilt-corrected mixed reality image is displayed on the stationary display 300. While many similarities exist between the configuration and controls of the fifth embodiment and those of the first embodiment, the fifth embodiment differs from the first embodiment in that a function configuration has been added thereto which enables the user to select whether tilt correction will be performed on the mixed reality image displayed on the second display unit 110.

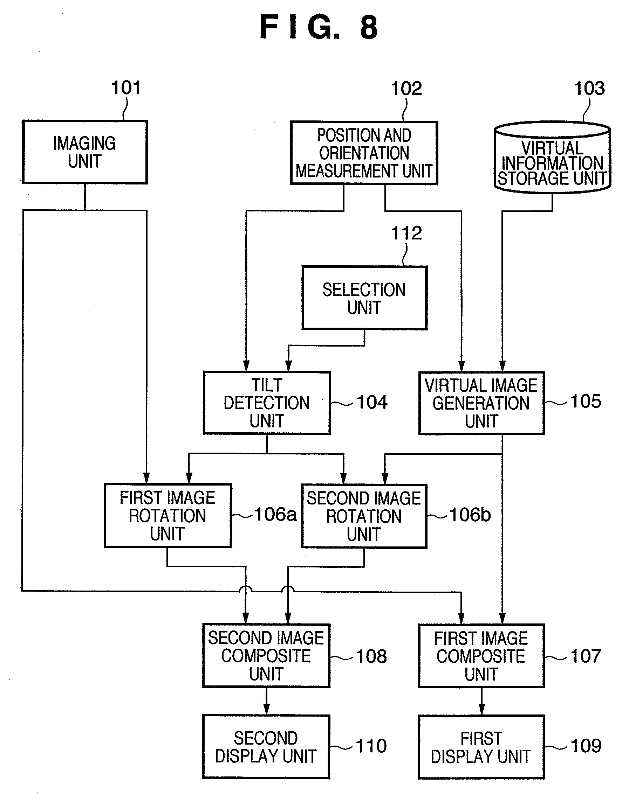

FIG. 8 is a block diagram showing an outline of a function configuration of the image processing apparatus according to the present embodiment. In comparison with the first embodiment, a selection unit 112 has been added to the fifth embodiment. With respect to the configuration and controls of the present embodiment, only portions thereof which differ from the first embodiment will now be described.

The selection unit 112 functions as a user interface to be used by the user for selecting whether processing by the tilt detection unit 104 will be enabled or disabled. The selection unit 112 outputs a control signal indicating a selection result to the tilt detection unit 104. In the present embodiment, an input device to be operated by the user, such as a switch, a keyboard or a mouse, is connected to the image processing apparatus. The user is provided with two options, namely, "correct image tilt" and "do not correct image tilt". Based on the user's input to the input device, the selection unit 112 enables or disables processing by the tilt detection unit 104.

The selection unit 112 displays these options on the display, and accepts the selection by the user. When the user selects "correct image tilt", the selection unit 112 outputs a control signal to enable processing by the tilt detection unit 104. When the user selects "do not correct image tilt", the selection unit 112 outputs a control signal to disable processing by the tilt detection unit 104.

In the present embodiment, the tilt detection unit 104 receives as input a control signal from the selection unit 112, and outputs the detected tilt to the image rotation unit 106 and the second virtual image generation unit 111. When the control signal output from the selection unit 112 is set to disable processing of the tilt detection unit 104, the tilt detection unit 104 outputs a roll angle of 0 degrees to the image rotation unit 106. Otherwise, the tilt detection unit 104 performs the same processing as in the other embodiments.

As described above, the configuration according to the fifth embodiment enables the user to arbitrarily select whether tilt correction will be performed on a mixed reality image displayed on the second display unit 110. While an exemplary description of the present embodiment has been given in which the selection unit 112 is added to the configuration according to the first embodiment, the selection unit 112 may alternatively be added to configurations of other embodiments, and the above-described correction processing may be arranged to be performed only when the user selects to have such correction processing performed.

[Sixth embodiment]

An image processing apparatus according to a sixth embodiment outputs an image seen by an observer wearing an HMD and experiencing mixed reality to an HMD 200 and a stationary display 300. In this case, an ordinary mixed reality image is displayed on the HMD 200, while either an ordinary mixed reality image or a tilt-corrected mixed reality image is displayed on the stationary display 300. Many similarities exist between the configuration and controls of the sixth embodiment and those of the first and fifth embodiments. However, unlike the first embodiment, a function configuration has been added to the sixth embodiment which enables the user to select whether tilt correction will be performed on a mixed reality image displayed on the second display unit 110. In addition, while the fifth embodiment is arranged to switch whether tilt correction will be performed on images by controlling the tilt detection unit 104, the sixth embodiment is arranged to switch between output of tilt-corrected images and output of images for which tilt is not corrected and consequently select whether tilt correction will be performed on images.

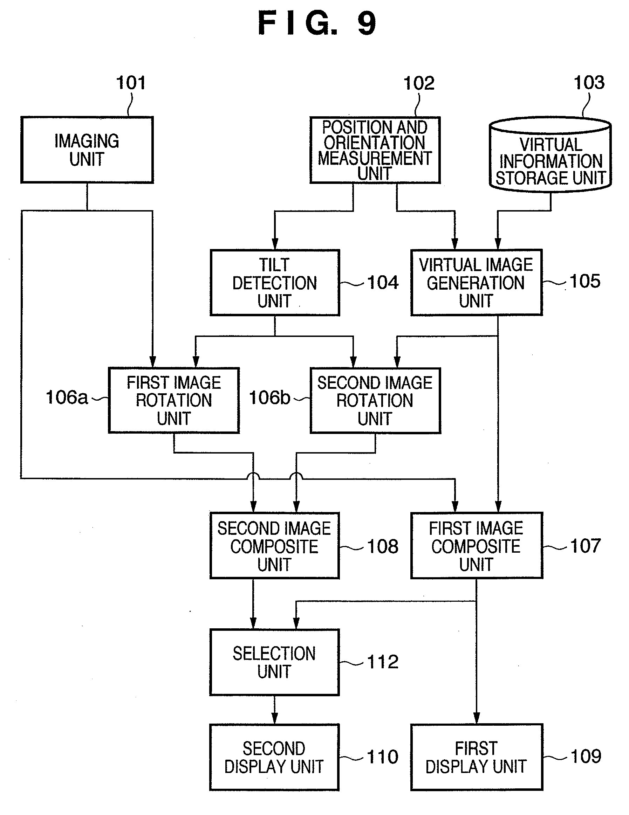

FIG. 9 is a block diagram showing an outline of a function configuration of the image processing apparatus according to the present embodiment. In comparison with the first embodiment, a selection unit 112 has been added to the sixth embodiment. With respect to the configuration and controls of the present embodiment, only portions thereof that differ from the first embodiment will now be described.

In the present embodiment, the selection unit 112 receives as input mixed reality images from the two image composite units 107 and 108, and selects either one of the mixed reality images and outputs the selected image to the second display unit 110. In this case, the selection of the mixed reality image is performed based on an instruction input by the user.

In other words, the selection unit 112 also functions as a user interface to be used by the user to select whether correction will be performed on images.

In the present embodiment, an input device to be operated by the user, such as a switch, a keyboard or a mouse, is connected to the image processing apparatus. The user is provided with two operations, namely, "correct image tilt" and "do not correct image tilt". Based on the user's input to the input device, the selection unit 112 selects either one of the mixed reality images. The selection unit 112 displays these options on the display, and accepts selection by the user. When the user inputs "correct image tilt", the selection unit 112 outputs the mixed reality image output from the second image composite unit 108. When the user inputs "do not correct image tilt", the selection unit 112 outputs the mixed reality image output from the first image composite unit 107.

As described above, the configuration according to the sixth embodiment enables the user to arbitrarily select whether tilt correction will be performed on a mixed reality image displayed on the second display unit 110. While an exemplary description of the present embodiment has been given in which the selection unit 112 is added to the configuration according to the first embodiment, the selection unit 112 may alternatively be added to configurations of other embodiments, and the above-described correction processing may be arranged to be performed only when the user selects to have such correction processing performed.

[Seventh embodiment]

An image processing apparatus according to a seventh embodiment outputs an image seen by an observer wearing an HMD and experiencing mixed reality to an HMD 200 and a stationary display 300. In this case, an ordinary mixed reality image is displayed on the HMD 200, while either an ordinary mixed reality image or a tilt-corrected mixed reality image is displayed on the stationary display 300. Many similarities exist between the configuration and controls of the seventh embodiment and those of the fifth embodiment. However, unlike the fifth embodiment, a function configuration has been added to the seventh embodiment which automatically controls whether tilt correction will be performed on a mixed reality image displayed on the second display unit 110, according to the attributes of CG retained in the virtual information storage unit 103.

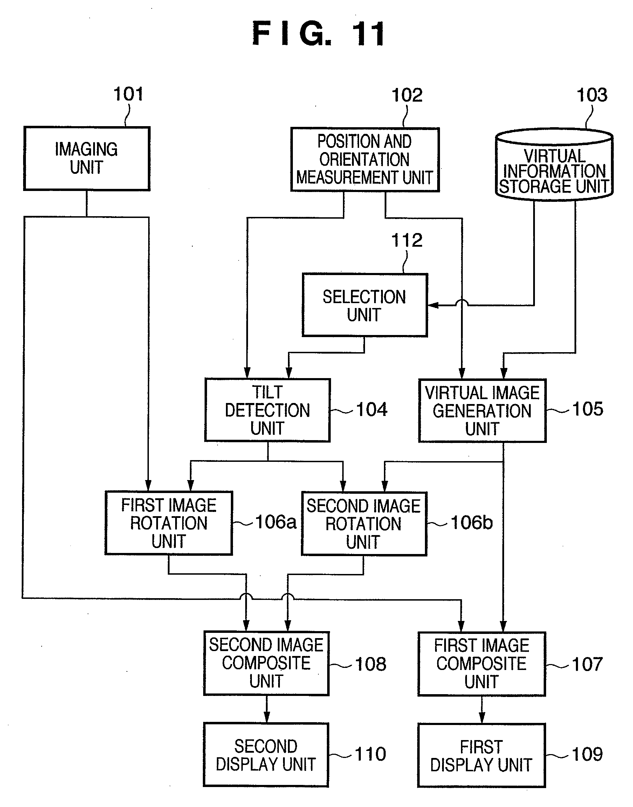

FIG. 11 is a block diagram showing an outline of a function configuration of the image processing apparatus according to the present embodiment. In comparison with the fifth embodiment, the selection unit 112 differs therefrom in that output from the virtual information storage unit 103 is accepted. With respect to the configuration and controls of the present embodiment, only portions thereof that differ from the fifth embodiment will now be described.

The selection unit 112 selects whether processing by the tilt detection unit 104 will be enabled or disabled. The selection unit 112 outputs a control signal indicating a selection result to the tilt detection unit 104. In the present embodiment, the selection unit 112 selects enabling/disabling of processing by the tilt detection unit 104 according to contents of the virtual information storage unit 103. In the present embodiment, in the event that the virtual information storage unit 103 outputs a CG object including character information to the virtual image generation unit 105, the processing of the tilt detection unit 104 is disabled. Otherwise, processing of the tilt detection unit 104 is enabled. The determination of whether to enable or disable processing of the tilt detection unit 104, which is performed by the selection unit 112, may be arranged to be executed based on, for instance, information stored in the virtual information storage unit 103 indicating object types in accordance with virtual information. Alternatively, for instance, virtual information may be analyzed using a known character recognition technique, whereby processing of the tilt detection unit 104 is disabled when characters are recognizable and enabled when characters are not recognizable.

In the present embodiment, even when viewpoint movement is involved, the virtual image generation unit 105 always generates virtual images of character information using directions in images displayed on the first display unit 109 so that character information does not move with respect to the observer wearing the HMD 200. Therefore, in the present embodiment, when the virtual information storage unit 103 outputs a CG object that includes character information to the virtual image generation unit 105, display of a mixed reality image including character information on the second display unit 110 may be appropriately controlled by not correcting the tilt of the image. Tilt of mixed reality images which do not include character information is corrected in the same manner as in the first embodiment.

In the present embodiment, in the event that the virtual information storage unit 103 outputs a CG object that includes character information to the virtual image generation unit 105, the selection unit 112 performs a selection which disables processing by the tilt detection unit 104. However, the present embodiment is not limited to this arrangement. For instance, selection to enable or disable tilt correction may be performed in accordance with attributes other than characters.

In addition, the selection unit 112 of the sixth embodiment may be arranged to accept output from the virtual information storage unit 103 so that the selection unit 112 respectively receives as input mixed reality images from the two image composite units 107, selects a mixed reality image, and outputs the selected image to the second display unit 110. In this case, control with regard to enabling and disabling of processing for correcting image tilt will be performed as described with respect to the present embodiment.

It is obvious that similar advantages may be achieved in such a case.

As described above, according to the seventh embodiment, it is now possible to automatically control switching of whether tilt correction will be performed on an image according the attributes of CG retained in the virtual information storage unit 103. While an exemplary description of the present embodiment has been given in which the selection unit 112 is added to the configuration according to the first embodiment, the selection unit 112 may alternatively be added to configurations of other embodiments, and the above-described correction processing may be arranged to be performed only when the user selects to have such correction processing performed.

[Eighth embodiment]

An image processing apparatus according to an eighth embodiment outputs an image of an observer wearing an HMD and experiencing mixed reality to an HMD 200 and a stationary display 300. In this case, an ordinary mixed reality image is displayed on the HMD 200, while either an ordinary mixed reality image or a tilt-corrected mixed reality image is displayed on the stationary display 300. While many similarities exist between the configuration and controls of the eighth embodiment and those of the third embodiment, unlike the third embodiment, the eighth embodiment does not perform image tilt correction on portions of a CG having specific attributes in accordance with CG attributes retained in the virtual information storage unit 103.

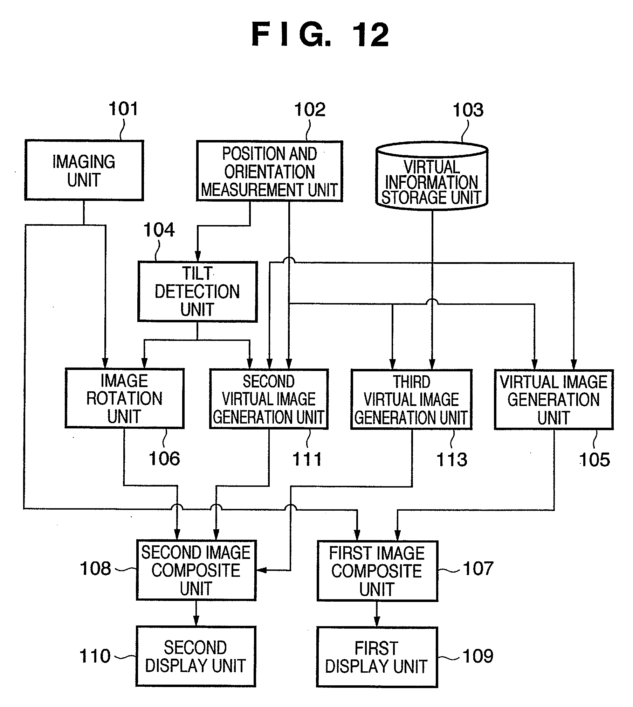

FIG. 12 is a block diagram showing an outline of a function configuration of the image processing apparatus according to the present embodiment. In comparison with the third embodiment, a third virtual image generation unit 113 has been further added to the eighth embodiment. With respect to the configuration and controls of the present embodiment, only portions thereof that differ from the third embodiment will now be described.

Based on information from the position and orientation measurement unit 102 and the virtual information storage unit 103, the third virtual image generation unit 113 performs CG rendering to generate a virtual image. The third virtual image generation unit 113 outputs the generated virtual image to the second image composite unit 108. Although the specific details of processing by the third virtual image generation unit 113 are the same as those of the virtual image generation unit 105, in the present embodiment, the third virtual image generation unit 113 only performs rendering on CG objects that include character information among the CG objects retained in the virtual information storage unit 103.

In the present embodiment, the second virtual image generation unit 111 only performs rendering on CG objects that do not include character information among the CG objects retained in the virtual information storage unit 103. Details of other processing are the same as in the third embodiment. Determination of whether character information exists may be executed using the methods described with respect to the seventh embodiment.

The second image composite unit 108 respectively receives as input an image resulting from rotation of a real image output from the imaging unit 106, a tilt-corrected virtual image output from the second virtual image generation unit 111, and a virtual image not tilt-corrected which is output from the third virtual image generation unit 113. The second image composite unit 108 outputs a generated mixed reality image to the second display unit 110.

The present embodiment is configured so that tilt correction is performed on CG objects that do not include character information among the CG objects retained, while tilt correction is not performed on CG objects that include character information. However, the present embodiment is not limited to this arrangement. For instance, an attribute other than character information may be used to classify CG objects into those on which tilt correction is to be performed and those on which tilt correction will not be performed.

As described, according to the eighth embodiment, in accordance with the attributes of CG retained in the virtual information storage unit 103, determination of whether tilt correction will be performed on an image will be automatically performed, and correction processing will be controlled according to such determination results. In other words, tilt correction will not be performed on images for CG where it is desirable not to perform tilt correction on images, while tilt-corrected mixed reality images will be presented for other CG. As a result, appropriate images may be provided to the stationary display apparatus 300 in accordance with CG attributes. While an exemplary description of the present embodiment has been given in which the selection unit 112 is added to the configuration according to the first embodiment, the selection unit 112 may alternatively be added to configurations of other embodiments, and the above-described correction processing may be arranged to be performed only when the user selects to have such correction processing performed.

[Ninth embodiment]

An image processing apparatus according to a ninth embodiment outputs an image seen by an observer wearing an HMD and experiencing mixed reality to an HMD 200 and a stationary display 300. In this case, an ordinary mixed reality image is displayed on the HMD 200, while a tilt-corrected mixed reality image is displayed on the stationary display 300. While many similarities exist between the configuration and controls of the ninth embodiment and those of the first embodiment, unlike the first embodiment, the ninth embodiment is arranged so that tilt correction is only performed on real images, and tilt correction is not performed on virtual images. For instance, when it is determined that a CG object retained in the virtual information storage unit 103 consists entirely of character information, tilt correction is only performed on real images.

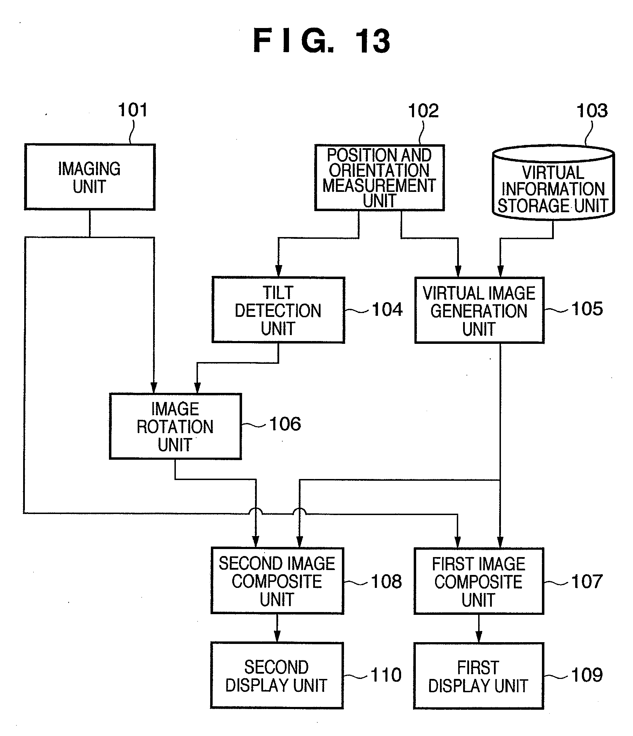

FIG. 13 is a block diagram showing an outline of a function configuration of the image processing apparatus according to the present embodiment. In comparison with the first embodiment, the ninth embodiment differs in that there is now only one image rotation unit 106. With respect to the configuration of the present embodiment, only portions thereof that differ from the first embodiment will now be described.

In the present embodiment, the mixed reality presentation apparatus 100 acquires a captured real image from the imaging unit 101, creates a virtual image based on the orientation of the imaging unit HMD 101 (HMD 200), detects a tilt of the real image, and corrects the real image based on the detected tilt of the real image. Furthermore, the mixed reality presentation apparatus 100 generates a composite image based on the tilt-corrected real image and the virtual real image, and outputs the corrected composite image to the stationary display apparatus 300.

In the present embodiment, based on information from the position and orientation measurement unit 102 and the virtual information storage unit 103, the virtual image generation unit 105 performs CG rendering to generate a virtual image. The virtual image generation unit 105 outputs the generated virtual image to the first image composite unit 107.

In the present embodiment, the second image composite unit 108 superimposes an uncorrected virtual image output from the virtual image generation unit 105 onto a real image after rotation output from the image rotation unit 106. The mixed reality image generated by the second image composite unit 108 is output to the second display unit 110.

As described above, the configuration according to the ninth embodiment enables tilt correction to be performed only on real images in cases where a CG object may be defined as being entirely composed of character information.

[Tenth embodiment]

An image processing apparatus according to a tenth embodiment outputs an image seen by an observer wearing an HMD and experiencing mixed reality to an HMD 200 and a stationary display 300. In this case, an ordinary mixed reality image is displayed on the HMD 200, while a tilt-corrected mixed reality image is displayed on the stationary display 300. While many similarities exist between the configuration and controls of the tenth embodiment and those of the first embodiment, unlike the first embodiment, the tenth embodiment is arranged so that trimming of effective areas is performed on a mixed reality image on which tilt correction has been applied. Through such processing, the configuration of the present embodiment is capable of preventing occurrences of defects in mixed reality images.

The function configuration of the image processing apparatus according to the present embodiment has the same outline as that of the first embodiment (FIG. 1). With respect to the configuration of the present embodiment, only portions thereof that differ from the first embodiment will now be described.

In the present embodiment, the second image composite unit 108 superimposes onto real images after rotation outputted from the two image rotation units 106 a virtual image after rotation output from the other image rotation unit 106, further performs trimming, and generates a mixed reality image. The second image composite unit 108 outputs the generated mixed reality image to the second display unit 110. Trimming performed by the second image composite unit 108 according to the present embodiment will now be described.

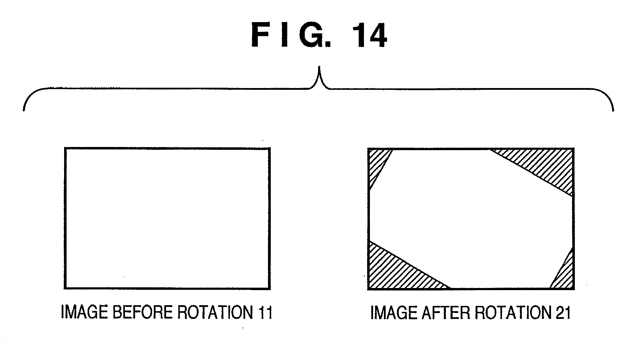

In the present embodiment, a defect has occurred in the mixed reality image after rotation output from the image rotation units 106. FIG. 14 is a schematic diagram depicting an occurrence of a defect in an image after rotation 21, which is an image created by rotating the image before rotation 11.

Since the area represented by the shaded area in the image after rotation 21 does not exist in the image before rotation 11, the area cannot be expressed in the image after rotation 21. As a result, a defect occurs in the image after rotation 21.

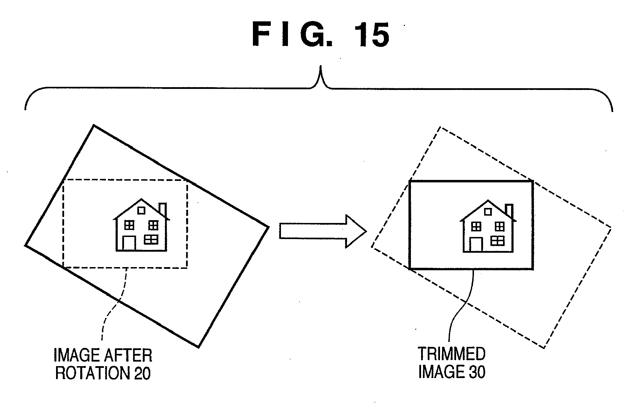

In the present embodiment, as shown in FIG. 15, trimming is performed on the effective areas of the image after rotation 20 to obtain a trimmed image 30. FIG. 15 is an explanatory diagram of trimming performed by the second image composite unit 108. In this case, trimming refers to processing in which a rectangular image included in an overlapping portion of an image output to the stationary display unit 300 and the displayed area of the stationary display unit 300. Note that a side of the rectangular image is parallel to any one of the respective sides of the displayed area.

Generally, effective areas of an image after rotation 20 differ according to the angle (roll angle) at which the image is rotated. In the present embodiment, with respect to the image after rotation 20, trimming of effective areas is always performed at a roll angle of 90 degrees regardless of rotation angle. As a result, a trimmed image 30 with no defects may be obtained for an arbitrary angle.

Additionally, in the present embodiment, while trimming of mixed reality images is performed in addition to the configuration of the image processing apparatus according to the first embodiment, trimming may also be applied to configurations according to the second and the fourth to ninth embodiments. However, when applying the above-described trimming to the configuration according to the fourth embodiment, trimming will be performed by the image rotation unit 106.

As described above, in the configuration according to the present embodiment, a rectangular image included in the overlapping portion of an output image and the displayed area of the stationary display unit 300 is extracted and output so that one of the respective sides of the rectangular image is parallel to any one of the sides of the displayed area. As a result, the configuration according to the present embodiment enables presentation of mixed reality images that are free of defects due to image rotation.

[Eleventh embodiment]

An image processing apparatus according to an eleventh embodiment outputs an image seen by an observer wearing an HMD and experiencing mixed reality to an HMD 200 and a stationary display 300. In this case, an ordinary mixed reality image is displayed on the HMD 200, while a tilt-corrected mixed reality image is displayed on the stationary display 300. While many similarities exist between the configuration and controls of the eleventh embodiment and those of the first embodiment, unlike the first embodiment, the eleventh embodiment is arranged so that a relative tilt of an image with respect to a certain reference value is detected in order to perform correction. Tilt of a mixed reality image displayed on the stationary display apparatus 300 may now be corrected, using as a reference the state in which the head of the observer wearing the HMD 200 is tilted (for instance, when peering down at an object). In other words, the state in which the mixed reality image displayed on the stationary display apparatus 300 is tilted by the reference value is kept constant.

An outline of the function configuration according to the present embodiment is the same as that for the first embodiment (FIG. 1). With respect to the configuration of the present embodiment, only portions thereof that differ from the first embodiment will now be described.

In the present embodiment, the tilt detection unit 104 receives as input information regarding the viewpoint orientation of an observer wearing the HMD 200 from the position and orientation measurement unit 102, detects a tilt of a real image, and outputs the detected tilt to the image rotation unit 106. In the present embodiment, the tilt of a real image is detected by extracting a roll angle, which is a rotation angle when the viewpoint is given as the rotational axis, from an orientation output from the position and orientation measurement unit 102 installed in the HMD 200. At this point, a rotation reference value is subtracted from the extracted roll angle, and a value after subtraction is transmitted to the image rotation unit 106. The rotation reference value is retained in a disk device or a RAM and the like, not shown, provided inside the mixed reality presentation apparatus 100, and is set during initialization of the image processing apparatus according to the present embodiment. In an alternative arrangement, the rotation reference value may be modified through user operations of an input unit separately provided in the image processing apparatus.

As described above, with the configuration according to the eleventh embodiment, the state in which the mixed reality image displayed on the stationary display apparatus 300 is tilted by the reference value may now be kept constant.

[Other embodiments]

While exemplary embodiments of the present invention have been described in detail above, the present invention may take such forms as, for instance, a system, an apparatus, a method, a program or a storage medium. To be more specific, the present invention may be applied to either a system composed of a plurality of devices, or an apparatus consisting of a single device.

The present invention also includes cases where a software program which implements the functions of the above-described embodiments is directly or remotely supplied to a system or an apparatus, and the functions are achieved by a computer reading out and executing the supplied program code of the system or apparatus.

Therefore, the program code itself, to be installed to the computer to enable the computer to achieve the functions and processing of the present invention, are also included in the technical scope of the present invention. In other words, the present invention also encompasses the computer program itself for implementing the functions and processing of the present invention.

In such cases, as long as program functions are retained, the program may take such forms as object code, an interpreter-executable program, or script data supplied to an OS for execution.

Recording media for supplying the program include, for instance, a floppy (registered trademark) disk, a hard disk, an optical disk, a magneto-optical disk, an MO, a CD-ROM, a CD-R, a CD-RW, a magnetic tape, a nonvolatile memory card, a ROM, a DVD (DVD-ROM, DVD-R) or the like.

Other methods for supplying the program may include cases where a browser of a client computer is used to connect to an Internet home page to download a computer program according to the present invention or a compressed file having an auto-install function into a recording medium such as a hard disk. In addition, the present invention may also be achieved by dividing the program code which comprises the program of the present invention into a plurality of files, and downloading each file from a different home page. In other words, a WWW server which allows downloading of program code which achieves the functions and processing of the present invention on a computer by a plurality of users is also included in the present invention.

Furthermore, the program may also be supplied by first encoding the program according to the present invention and storing the encoded program in a storage medium such as a CD-ROM to be distributed to users. Subsequently, users who satisfy certain conditions will be allowed to download key information for decoding from a home page via the Internet. The key information may be used to execute the encoded program to install the same on a computer in order to achieve the present invention.

The functions of the above-described embodiments may also be achieved by executing a readout program by a computer. In other words, the functions of the above-described embodiments may be achieved by processing performed by an OS or the like running on a computer, wherein the OS or the like performs a portion of or all of the actual processing based on instructions from the program.

Moreover, the functions of the above-described embodiments may be realized by having the program, read out from the storage medium, written into a memory provided on a function extension board inserted into a computer or a function extension unit connected to the computer. In other words, the functions of the above-described embodiments may also be achieved by having a CPU or the like provided on the function extension board or the function extension unit perform a portion of or all of the actual processing based on instructions of the program.

According to the present invention, a technique may be provided that is capable of respectively presenting appropriate mixed reality images to an observer wearing an HMD and third persons not wearing HMDs.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An information processing apparatus connected to a display apparatus, the information processing apparatus is characterized by comprising an acquisition means (101) configured to acquire a real image captured by an imaging apparatus; a generation means (105) configured to generate a virtual image based on an orientation of said imaging apparatus; a detection means (104) configured to detect a tilt of the real image; a correction means (106) configured to correct the real image based on the detected tilt of said real image; a composite means (108) configured to generate a composite image based on the corrected real image and the virtual image; and an output means (110) configured to output the corrected composite image to said display apparatus.

## Claims

1. An information processing apparatus connected to a display apparatus, the information processing apparatus **characterized by** comprising:

   an acquisition means (101) configured to acquire a real image captured by an imaging apparatus;
   a generation means (105) configured to generate a virtual image based on an orientation of said imaging apparatus;
   a detection means (104) configured to detect a tilt of the real image;
   a correction means (106) configured to correct the real image based on the detected tilt of said real image;
   a composite means (108) configured to generate a composite image based on the corrected real image and the virtual image; and
   an output means (110) configured to output the corrected composite image to said display apparatus.

2. The information processing apparatus according to claim 1, **characterized in that**
   said correction means corrects the virtual image generated by said generation means based on the tilt of the real image, and
   said composite means generates the composite image using the corrected real image and the corrected virtual image.

3. The information processing apparatus according to claim 1, **characterized in that**
   said generation means generates the virtual image based on the orientation of said imaging apparatus and the tilt of the real image, and
   said composite means generates the composite image using the corrected real image, and the virtual image generated based on the orientation of said imaging apparatus and the tilt of the real image.

4. The information processing apparatus according to claim 1, **characterized by** further comprising a second composite means configured to generate a composite image based on an uncorrected real image and the virtual image; wherein
   the composite image generated by said second composite means is output to a second display apparatus.

5. The information processing apparatus according to any one of claims 1 to 4, **characterized in that**
   said display apparatus is a stationary display, and said second display apparatus is a portable display.

6. The information processing apparatus according to any one of claims 1 to 5, **characterized in that**
   said detection means performs said detection based on at least one of an orientation of said imaging apparatus measured by a six-degree-of-freedom sensor, an analysis based on a marker image included in the real image, or an optical flow calculated based on the real image.

7. The information processing apparatus according to any one of claims 1 to 6, **characterized by** further comprising:

   a determination means configured to determine whether the virtual image includes a character; wherein
   said correction means performs said correction when the determination means determines that the virtual image does not include characters.

8. The information processing apparatus according to any one of claims 1 to 7, **characterized in that**
   said correction involves image rotation.

9. An information processing apparatus connected to a display apparatus, the information processing apparatus **characterized by** comprising:

   an acquisition means (101) configured to acquire a real image captured by an imaging apparatus;
   a generation means (105) configured to generate a virtual image based on an orientation of said imaging apparatus;
   a composite means (107) configured to generate a composite image based on the real image and the virtual image;
a detection means (104) configured to detect a tilt of the real image;
a correction means (106) configured to correct the composite image based on the detected tilt of the real image; and
an output means (110) configured to output the corrected composite image to said display apparatus.

10. An image processing apparatus, **characterized by** comprising:

an image acquisition means (101) configured to acquire an image;
a detection means (104) configured to detect a tilt of the image;
an image generation means (105) configured to generate an image with which to generate a composite image;
a correction means (106) configured to correct the image acquired by said image acquisition means based on detection results of said detection means;
a first composite means (108) configured to generate the composite image based on the image generated by said image generation means and the image corrected by said correction means; and
a first output means (110) configured to output the composite image generated by said first composite means.

11. The image processing apparatus according to claim 10, **characterized by** further comprising:

a second composite means configured to generate a composite image based on the image generated by said image generation means and the image acquired by said image acquisition means; and
a second output means configured to output the composite image generated by said second composite means.

12. The image processing apparatus according to claim 10, **characterized by** further comprising:

a second correction means configured to correct the image generated by said image generation means based on the detection results of said detection means; and
a second output means configured to generate a composite image based on the image acquired by said image acquisition means and the image corrected by said correction means and to output the composite image.

13. An image processing apparatus, **characterized by** comprising:

an image acquisition means (101) configured to acquire an image;
a detection means (104) configured to detect a tilt of the image;
an image generation means (105) configured to generate an image with which to generate a composite image;
a composite means (107) configured to generate the composite image based on the image acquired by said image acquisition means and the image generated by said image generation means;
a correction means (106) configured to correct the composite image generated by said image composite means based on the detection results of said detection means; and
a first output means (110) configured to output the image corrected by said correction means.

14. The image processing apparatus according to claim 13, **characterized by** further comprising:

a second output means configured to output the composite image generated by said composite means.

15. A control method for an information processing apparatus, the control method **characterized by** comprising:

an image acquisition step of acquiring an image;
a detection step of detecting a tilt of the image;
an image generation step of generating an image to be with which to generate a composite image;
a correction step of correcting the image acquired in said image acquisition step based on the detection results of said detection step;
a first composing step of generating the composite image based on the image generated in said image generation step and the image corrected in said correction step; and
a first output step of outputting the composite image generated in said first composing step.

16. A control method for an information processing apparatus, the control method **characterized by** comprising:

an image acquisition step of acquiring an image;
a detection step of detecting a tilt of the image;
an image generation step of generating an image to be used in generating a composite image;
a composing step of generating the composite image based on the image acquired in said image acquisition step and the image generated in said image generation step;
a correction step of correcting the composite image generated in said image composing step based on the detection results of said detection step; and
a first output step of outputting the image corrected in said correction step.

17. An image processing apparatus having a display apparatus, a second display apparatus, and an information processing apparatus connected to said display apparatus and said second display apparatus, said image processing apparatus **characterized by** comprising:

an acquisition means configured to acquire a real image captured by an imaging apparatus;
a detection means configured to detect a tilt of the real image;
a correction means configured to correct the real image based on a detected tilt of the real image; and
an output means configured to output the corrected real image to said display apparatus, and output the real image acquired by said acquisition means to said second display apparatus.

18. A computer program stored in a storage medium **characterized by** enabling a computer to function as the information processing apparatus according to any one of claims 1 to 9.

19. A storage medium readable by a computer **characterized by** storing the computer program according to claim 18.

# F I G. 1

```
   101                      102                        103
IMAGING        POSITION AND            VIRTUAL
UNIT           ORIENTATION             INFORMATION
               MEASUREMENT             STORAGE UNIT
               UNIT


                    TILT              VIRTUAL IMAGE
                    DETECTION  ~104   GENERATION     ~105
                    UNIT              UNIT


      106a~ FIRST IMAGE    106b~ SECOND IMAGE
            ROTATION UNIT         ROTATION UNIT


         SECOND IMAGE              FIRST IMAGE
         COMPOSITE      ~108       COMPOSITE      ~107
         UNIT                      UNIT


         SECOND         ~110       FIRST          ~109
         DISPLAY UNIT              DISPLAY UNIT
```

# F I G. 2

IMAGE BEFORE
ROTATION 10

ROLL ANGLE =
-45 DEGREES

IMAGE AFTER
ROTATION 20

# FIG. 3

```
                    ┌─────────┐
                    │  START  │
                    └────┬────┘
                         │
         ┌───────────────┼───────────────────────┐
         │      ┌────────▼─────────────┐
         │      │      INITIALIZE       │────── S1010
         │      └────────┬─────────────┘
         │               │
         │      ┌────────▼─────────────┐
         │      │   INPUT REAL IMAGE    │────── S1020
         │      └────────┬─────────────┘
         │               │
         │      ┌────────▼─────────────┐
         │      │ MEASURE POSITION AND  │
         │      │ ORIENTATION OF        │────── S1030
         │      │ USER'S VIEWPOINT      │
         │      └────────┬─────────────┘
         │               │
         │      ┌────────▼─────────────┐
         │      │  DETECT IMAGE TILT    │────── S1040
         │      └────────┬─────────────┘
         │               │
         │      ┌────────▼─────────────┐
         │      │ GENERATE VIRTUAL IMAGE│────── S1050
         │      └────────┬─────────────┘
         │               │
         │      ┌────────▼─────────────┐
         │      │  ROTATE REAL IMAGE    │────── S1060
         │      │  AND VIRTUAL IMAGE    │
         │      └────────┬─────────────┘
         │               │
         │      ┌────────▼─────────────┐
         │      │ COMPOSITE REAL IMAGE  │────── S1070
         │      │  AND VIRTUAL IMAGE    │
         │      └────────┬─────────────┘
         │               │
         │          ╱────▼────╲  S1080
         │     NO  ╱           ╲
         └────────◄   FINISH?   ►
                   ╲           ╱
                    ╲────┬────╱
                         │ YES
                    ┌────▼────┐
                    │   END   │
                    └─────────┘
```

# F I G. 4

```
        101                              102              103
         ┌──────────┐          ┌────────────────┐   ┌──────────────┐
         │ IMAGING  │          │ POSITION AND   │   │   VIRTUAL    │
         │  UNIT    │          │ ORIENTATION    │   │ INFORMATION │
         └──────────┘          │ MEASUREMENT    │   │ STORAGE UNIT │
                               │    UNIT        │   └──────────────┘
                               └────────────────┘
```

| | | |
|---|---|---|
| | TILT DETECTION UNIT ～104 | VIRTUAL IMAGE GENERATION UNIT ～105 |
| 106a～ FIRST IMAGE ROTATION UNIT | 106b SECOND IMAGE ROTATION UNIT | |
| SECOND IMAGE COMPOSITE UNIT ～108 | FIRST IMAGE COMPOSITE UNIT ～107 | |
| FIRST DISPLAY UNIT ～110 | SECOND DISPLAY UNIT ～109 | |

# F I G. 5

```
    101                        102                      103
┌──────────┐         ┌──────────────────┐       ┌──────────────┐
│ IMAGING  │         │   POSITION AND    │       │   VIRTUAL    │
│   UNIT   │         │   ORIENTATION     │       │ INFORMATION  │
└──────────┘         │ MEASUREMENT UNIT  │       │ STORAGE UNIT │
                     └──────────────────┘       └──────────────┘
                              │
                     ┌──────────────┐
             104 ~   │    TILT      │
                     │  DETECTION   │
                     │    UNIT      │
                     └──────────────┘

         ┌──────────┐      ┌──────────────┐      ┌──────────────┐
 106 ~   │  IMAGE   │      │    SECOND    │      │ VIRTUAL IMAGE│
         │ ROTATION │ 111~ │ VIRTUAL IMAGE│ 105~ │  GENERATION  │
         │   UNIT   │      │GENERATION UNIT│     │    UNIT      │
         └──────────┘      └──────────────┘      └──────────────┘

      ┌──────────────┐           ┌──────────────┐
108 ~ │ SECOND IMAGE │     107 ~ │  FIRST IMAGE │
      │  COMPOSITE   │           │  COMPOSITE   │
      │    UNIT      │           │    UNIT      │
      └──────────────┘           └──────────────┘

      ┌──────────────┐           ┌──────────────┐
110 ~ │   SECOND     │     109 ~ │    FIRST     │
      │ DISPLAY UNIT │           │ DISPLAY UNIT │
      └──────────────┘           └──────────────┘
```

22

# FIG. 6

```
      101                    103                    102
   ┌──────────┐        ┌──────────────┐      ┌──────────────────┐
   │          │        │   VIRTUAL    │      │   POSITION AND   │
   │ IMAGING  │        │ INFORMATION  │      │   ORIENTATION    │
   │   UNIT   │        │ STORAGE UNIT │      │  MEASUREMENT     │
   │          │        │              │      │      UNIT        │
   └──────────┘        └──────────────┘      └──────────────────┘
```

IMAGING UNIT

VIRTUAL INFORMATION STORAGE UNIT

POSITION AND ORIENTATION MEASUREMENT UNIT

105 — VIRTUAL IMAGE GENERATION UNIT

107a — FIRST IMAGE COMPOSITE UNIT

104 — TILT DETECTION UNIT

106 — IMAGE ROTATION UNIT

109 — FIRST DISPLAY UNIT

110 — SECOND DISPLAY UNIT

# FIG. 7

```
                    START

                  INITIALIZE              ~S1010

              INPUT REAL IMAGE            ~S1020

       MEASURE POSITION AND ORIENTATION   ~S1030
            OF USER'S VIEWPOINT

              DETECT IMAGE TILT           ~S1040

            GENERATE VIRTUAL IMAGE        ~S1050

            COMPOSITE REAL IMAGE          ~S1070
              AND VIRTUAL IMAGE

            ROTATE COMPOSITE IMAGE        ~S1075

                                     S1080
   NO
                    FINISH?

                    | YES

                    END
```

EP 1 852 828 A2

# FIG. 8

101
IMAGING
UNIT

102
POSITION AND
ORIENTATION
MEASUREMENT UNIT

103
VIRTUAL
INFORMATION
STORAGE UNIT

112
SELECTION
UNIT

TILT
DETECTION
UNIT ~104

VIRTUAL IMAGE
GENERATION
UNIT ~105

FIRST IMAGE
ROTATION
UNIT ~106a

SECOND IMAGE
ROTATION
UNIT ~106b

SECOND IMAGE
COMPOSITE
UNIT ~108

FIRST IMAGE
COMPOSITE
UNIT ~107

SECOND
DISPLAY UNIT ~110

FIRST
DISPLAY UNIT ~109

25

# F I G. 9

```
        101                        102                    103
   ┌─────────────┐        ┌─────────────────┐     ┌──────────────┐
   │   IMAGING   │        │ POSITION AND    │     │   VIRTUAL    │
   │    UNIT     │        │ ORIENTATION     │     │ INFORMATION  │
   │             │        │ MEASUREMENT     │     │ STORAGE UNIT │
   └─────────────┘        │     UNIT        │     └──────────────┘
                          └─────────────────┘
```

```
              ┌─────────────┐          ┌─────────────────┐
              │    TILT     │          │  VIRTUAL IMAGE  │
              │  DETECTION  │~104      │   GENERATION    │~105
              │    UNIT     │          │      UNIT       │
              └─────────────┘          └─────────────────┘
```

```
       ┌─────────────┐            ┌─────────────────┐
106a~  │ FIRST IMAGE │   106b~    │  SECOND IMAGE   │
       │  ROTATION   │            │    ROTATION     │
       │    UNIT     │            │      UNIT       │
       └─────────────┘            └─────────────────┘
```

```
     ┌─────────────┐            ┌─────────────────┐
     │ SECOND IMAGE│            │   FIRST IMAGE   │
     │  COMPOSITE  │~108        │    COMPOSITE    │~107
     │    UNIT     │            │      UNIT       │
     └─────────────┘            └─────────────────┘
```

```
     ┌─────────────┐
     │  SELECTION  │~112
     │    UNIT     │
     └─────────────┘
```

```
     ┌─────────────┐            ┌─────────────────┐
     │   SECOND    │~110        │     FIRST       │~109
     │ DISPLAY UNIT│            │  DISPLAY UNIT   │
     └─────────────┘            └─────────────────┘
```

# F I G. 10

# F I G. 11

101

IMAGING
UNIT

102

POSITION AND
ORIENTATION
MEASUREMENT UNIT

103

VIRTUAL
INFORMATION
STORAGE UNIT

112

SELECTION
UNIT

TILT
DETECTION
UNIT — 104

VIRTUAL IMAGE
GENERATION
UNIT — 105

FIRST IMAGE
ROTATION
UNIT — 106a

SECOND IMAGE
ROTATION
UNIT — 106b

SECOND IMAGE
COMPOSITE
UNIT — 108

FIRST IMAGE
COMPOSITE
UNIT — 107

SECOND
DISPLAY UNIT — 110

FIRST
DISPLAY UNIT — 109

# F I G. 12

```
    101                        102                      103

┌─────────────┐      ┌──────────────────┐      ┌─────────────────┐
│   IMAGING   │      │   POSITION AND   │      │     VIRTUAL     │
│    UNIT     │      │   ORIENTATION    │      │   INFORMATION   │
│             │      │ MEASUREMENT UNIT │      │  STORAGE UNIT   │
└─────────────┘      └──────────────────┘      └─────────────────┘

              104

         ┌─────────────┐
         │    TILT     │
         │  DETECTION  │
         │    UNIT     │
         └─────────────┘

┌─────────────┐  ┌──────────────┐  ┌──────────────┐  ┌──────────────┐
│    IMAGE    │  │    SECOND    │  │    THIRD     │  │ VIRTUAL IMAGE │
│   ROTATION  │  │ VIRTUAL IMAGE│  │ VIRTUAL IMAGE│  │  GENERATION   │
│    UNIT     │  │GENERATION UNIT│ │GENERATION UNIT│ │     UNIT      │
└─────────────┘  └──────────────┘  └──────────────┘  └──────────────┘

     106              111              113              105

   ┌──────────────┐        ┌──────────────┐
   │ SECOND IMAGE │        │  FIRST IMAGE │
108│  COMPOSITE   │◄───────│  COMPOSITE   │107
   │    UNIT      │        │    UNIT      │
   └──────────────┘        └──────────────┘

   ┌──────────────┐        ┌──────────────┐
   │    SECOND    │        │    FIRST     │
110│ DISPLAY UNIT │        │ DISPLAY UNIT │109
   └──────────────┘        └──────────────┘
```

# F I G. 13

```
        101                      102                    103
IMAGING                  POSITION AND            VIRTUAL
UNIT                     ORIENTATION             INFORMATION
                         MEASUREMENT             STORAGE UNIT
                         UNIT


                         TILT                   VIRTUAL IMAGE
                         DETECTION      ~104    GENERATION       ~105
                         UNIT                   UNIT


        IMAGE
        ROTATION       ~106
        UNIT


    SECOND IMAGE                        FIRST IMAGE
    COMPOSITE          ~108             COMPOSITE        ~107
    UNIT                                UNIT


    SECOND                              FIRST
    DISPLAY UNIT       ~110             DISPLAY UNIT     ~109
```

# F I G. 14

IMAGE BEFORE ROTATION 11          IMAGE AFTER ROTATION 21

# F I G. 15

IMAGE AFTER
ROTATION 20

TRIMMED
IMAGE 30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10164426 A

- JP 2003296759 A